# EUROPEAN PATENT APPLICATION

(11) **EP 2 096 242 A2**
(43) Date of publication of application: **02.09.2009**
(21) Application number: 09380032.4
(22) Date of filing: 26.02.2009
(51) Int. Cl.: E05B 73/00, E05B 67/00

(54) **Improved anti-theft device for motorcycles**

(30) Priority: 27.02.2008 ES 200800544
(71) Applicant: Colome Calafi, Fernando Salvador, 08110 Montcada I Reixas Barcelona (ES)
(72) Inventor: Colome Calafi, Fernando Salvador, 08110 Montcada I Reixas Barcelona (ES)
(74) Representative: Morgades y Manonelles, Juan Antonio

(57) **Abstract**

The device includes a jointed part guaranteeing the complete pivoting movement of a fixed bushing on the security chain (111) around a first fixed point on the motorcycle's bodywork. A rear mounting part (115,181), which is fitted to anchor at the free bushing (112) on the security chain when the user wishes to stow the antitheft device, plus a front mounting part (116) which anchors the free bushing on the security chain when the user wishes to fit the antitheft device. Both the jointed part and the rear mounting part are mounted at two different fixed points on the bodywork through their respective holes already existing in such bodywork so that the number of parts in the antitheft device is substantially decreased thereby reducing the time required for assembly.

## Description

This Invention Patent application, as stated in the title, consists of an improved antitheft device for motorcycles, which provides numerous advantages as stated in this report.

### Field of the technique:

This invention proposes a new and advantageous antitheft device for motorcycles similar to those which include a jointed security cable or chain which is held by one of its ends to a fixed point on the motorcycle's bodywork and by the other end to the handlebar grips in its operating position or to another fixed point on the motorcycle's bodywork when it is in the stowed position. The anti-theft device in the invention when operating provides a high degree of security against illegal tampering to the motorcycle and when stowed provides easy storage of the security cable or chain without it obstructing the user when riding the motorcycle.

### State of the Art:

Conventional security chains which are held by one end to a fixed point on the motorcycle chassis and with the free end being fixed to the handlebar in its operating position or to another fixed point on the motorcycle's bodywork in its stowed position, are jointed around the fixed point on the motorcycle's bodywork so that the joint end of the security chain may rotate, while the other end of the chain is fitted with some mountings which act as holding and retaining measures using pivots located on the end of the handlebar and on a fixed point on the motorcycle's bodywork.

There are some locks on these pivot mountings which are accessed by keys and therefore are the part of the device which is most likely to be subject to violation when this device is to be broken. The use of special steels make it very difficult, although not impossible, to break or to be sawn, the reason why thieves concentrate on locks.

The mountings, as described and claimed in Spanish patent No. 200,603,228 with the same owner, are formed by a bushing, inside which the are two holes laid out longitudinally, one of which is used to hold and immobilise the mounting pivot using a lock and the other to house and immobilise the security chain.

Also known is Spanish Patent Application No. 200.602.522 is an improved antitheft security bushing which, on its own or combined with other components prevents access and removal of certain parts. The aforementioned security bushing is formed by combining two parts: The first lower male part formed by a slightly cylindrical body formed by four different areas and a second female part with a preferably cylindrical external shape with a slightly cylindrical interior cavity with the middle section of this cavity having a circular hollow which houses a security washer. Around the open lower base there is a threaded surface so that the first male part may be placed inside the second female part so that after threading to a certain degree it is impossible to separate both parts.

However, the anchoring mechanisms known at the moment, both on the fixed end of the chain and on the free end of the chain to the fixed points on the motorcycle's chassis are particularly complex and sometimes difficult to handle by the user.

### Purpose of the Invention:

In order to resolve the aforementioned difficulties an improved antitheft device has been designed according to the preferred embodiment of the invention. This includes the following parts:
- a jointed part which is held by its lower section to a first fixed point on the motorcycle's bodywork and its upper section is held to the security chain's fixed bushing. These upper and lower jointed parts are joined to each other by relative pivoting methods guaranteeing a full pivoting movement for the fixed bushing on the security chain around the first fixed point on the motorcycle's bodywork;
- a rear mounting part on the free end of the security chain which is held to a second fixed point on the motorcycle's bodywork which has appropriate anchoring measures to anchor/release the free bushing on the chain from the rear mounting part when the user wishes to stow the anti-theft device; and
- a front mounting part on the free end of the security chain which is held to the handlebar grip. This has appropriate anchoring measures to anchor/release the free bushing on the chain from the front mounting part when the user wishes to stow the antitheft device.

The three aforementioned parts are laid out in a very simple configuration and are easily mounted onto the motorcyle's bodywork. At the same time they are effective against any possible tampering to them.

According to one of the advantages of this invention, both the jointed part and the rear mounting part are designed to be fixed to two different points on the motorcyle's bodywork using the respective already existing holes in the motorcyle's bodywork itself. In this manner, the number of parts involved in the antitheft device is substantially reduced and therefore the amount of time invested in mounting them, which recently has included an additional action to mount the chain on the motorcycle is, is also reduced.

The fixed mounting position of the jointed part on the bodywork shall preferably be on the side of the aforementioned bodywork. Whereas the position of the fixed mounting on the bodywork for the mounting part shall be on the rear of the bodywork near to the driver's seat. In this way the stowed position of the security chain is around the driver's seat, preferably around the rear with its bushing or free end anchored to the aforementioned rear mounting part. On the other hand when the user wishes to use the antitheft device in its operating position, he turns the security chain pivoted on its bushing or free end which is joined to the jointed part until its end or free bushing its anchored to the rear mounting part.

Although preferably the security chain is in its stowed position around the rear of the driver's seat, it may also be placed around the front part depending on the specific configuration of the motorcycle model.

The distance between the rear mounting assembly point and the jointed part and the distance between the mounting point of the aforementioned jointed part and the rear mounting part shall be similar. In this way with the fixed end of the security chain is guaranteed to turn by taking into consideration that there is a certain flexibility to be able to bend the security chain.

For its part, the front mounting part is fixed to the inside of the handlebar grip and includes a projecting mounting pivot and a series of counterweights as an option.

The free end of the security chain has a mounting formed by a bushing, in which there are two longitudinal holes, one of which contains and holds the mounting pivot for the front mounting part or rear mounting part using the corresponding lock with the other hole being designed to house and retain the chain.

The fixed end of the security chain includes a bushing inside which there is a rear hole to house and retain the fixed end of the chain. On the rear section this bushing has a longitudinal groove in an axial direction to receive and hold the rotating section of the jointed part.

According to the first preferred embodiment, the jointed part is formed by a male part (constituting the lower section with brackets which receives the upper end of an anchoring shaft which is fixed to the inside of an existing hole in a point on the motorcycle's bodywork. It is also formed by a female part (forming the section) which is mounted around the aforementioned male part and is held by it using a washer. In this way both parts (male and female) are mounted together in an axial direction but rotating relative to each other. The female part is designed to rotate on the fixed part of the male anchoring shaft thereby allowing the fixed end of the security chain to rotate.

The aforementioned male part has a generally cylindrical body and is fitted with a rear hole designed to receive the anchoring shaft and a front hole designed to perfectly match a special key such as an Allen key which when turned fled the male part around the anchoring shaft.

The aforementioned female part has a body formed by a two different parts is solidly held together with: a lower, generally cylindrical section fitted with an inner hole which is formed from the lower base and matches at the shape of the male part. It also has an upper section which is generally curved joining the upper base of the lower section and extending upwards. This is fitted with a hole in the perception into which the fixed end of the security chain is fixed.

The aforementioned lower section of the female part has a machined slot on its upper section, which facilitates the user threading the female part by hand.

In a hole of the lower section of the female part has an expanded section on its central part forming a housing to receive a washer matching its dimensions. The purpose of this washer is to immobilise both male and female parts in an axial direction but leaving the option for the relative rotation between them.

Due to this specific layout of the two sections forming the jointed part, a pivoting movement is achieved on the upper section of the jointed part relative to its lower section.

Preferably the external surface of the male part is fitted with at least one threaded section on the surface which, in the assembled position, perfectly matches the inner surface of the hole in the lower section of the female part. In this way, by mounting the female part on to the male part the aforementioned threaded section is screwed in. When fully screwed in it allows a circlip or locking washer to be fitted thereby removing the possibility of being dismantled from inside the expanded area of the inner hole in the female part.

The aforementioned of the section of the female part may be directly and solidly joined to the upper base of the lower section by some means of jointing such as welding or using an intermediate part. Preferably, the aforementioned intermediate part is joined to the lower section of the female part by inserting and immobilising the upper section of the aforementioned lower part into a hole in the flat section of the intermediate part.

In addition, the upper section of the female part may include a projecting section on one of its sides.

According to a second preferred embodiment, the jointed part is formed by the first jointed part described in the first embodiment to which additional security measures are added in order to increase security against possible unwanted tampering actions. This second variation preferably will be installed on larger motorcycles.

These additional security measures are formed by a security support which is fixed to the motorcycle's bodywork housing inside the largest section of the jointed part described in the first embodiment above to prevent it from being tampered with from the outside. The aforementioned security support is formed by a thin, flat security plate, which is fixed to the motorcycle's bodywork by a plate fixing screw. A taller security block is mounted and fixed on top of this using support joint screws.

Preferably these support joint screws are inserted into their respective holes fitted in the upper section of the security block and then into the relevant holes in the plate. In this way the assembly position of the support joint screw heads is supported against the upper base of the plate. Preferably, the heads of these support joint screws, which are supported on the upper base of the plate, are protected against any outside tampering by inserting some small balls or hardened milled pivots, which are housed inside the same.

Moreover, this security block includes another hole to house the jointed part. The plate also is equipped with a hole to allow the shaft to pass through mounted on the aforementioned jointed part that is fixed to the motorcyle's bodywork.

Moreover, the lower section of the security block is fitted with a blind hole to house the head of fee plate mounting screw, a shaft of which is inserted into her motorcycles bodywork passing through a hole drilled in the aforementioned plate.

The security plate may be flat, or include on its ends two extensions in the form of wings that are sloping compared to the central body of the plate. Around the free ends of both extensions there are holes designed to anchor and fix an anchoring pivot which projects outwards from one of the two wings.

As an option, an electronic alarm device may be attached inside the security block, which preferably sets off an acoustic sound when the security block is opened. In order to be able to appropriately house the aforementioned electronic alarm device inside the security block, the blind hole in the security block shall be sized so that it is able to house both the plate mounting screw head and the electronic alarm device.

According to a third preferred embodiment, the jointed part is designed to be fixed on its lower section to the motorcycle's housing. This is formed by a lower expanded part which extends upwards in the form of an inverted "U" and held to the aforementioned lower part and finally an upper rotating extended part which is connected in a jointed manner from the outside base of the inverted "U" extending outwards and upwards.

Preferably, the lower end of the aforementioned lower part is fixed to a hole in one point on the housing.

The aforementioned tilting part is fitted with a hole on its most exterior section to be able to attach the fixed bushing on the security chain.

In one of the three embodiments of the described jointed part, the joint between the hole of the upper rotating section and the bushing on the fixed end of the security chain is preferably by a circlip or locking washer.

According to one of the preferred embodiments the rear mounting part is formed by a solid part comprising a plate, a mounting pivot attached to the outermost end of the aforementioned plate and perpendicular to the same with this mounting pivot being able to be fitted into the corresponding hole in the mounting stud on the free end of the security chain and an expanded support part with a hole on the lower end of the aforementioned plate and perpendicular to it matching the aforementioned support part. This is fully inserted and held by a second hole in the motorcyle's bodywork. The support part in the second hole of the motorcycle's bodywork is held preferably by a screw that is inserted inside the support part and threaded into the aforementioned second hole. Additionally a cover is placed on the upper edge of the support part to prevent rusting of the aforementioned screw when exposed to external agents.

Therefore, in order to attach the rear mounting part to the second fixed point on the motorcycle's bodywork, the rear mounting part is first fitted into position with the support part into the aforementioned second hole in the bodywork. A screw is then placed into and screwed in to the hole in the aforementioned support part. Finally the upper opening of the support part is covered with a protective cover.

The lower end of the aforementioned plate is mounted with the support part of inserted into the second hole in the motorcycle's bodywork which he is in a slightly perpendicular direction to the bodywork so that the plate is fixed onto the bodywork. This plate has a section, which is folded upwards for the mounting pivot in order to facilitate the anchoring of the aforementioned mounting pivot to the free bushing of the security chain.

For its part, the front mounting part on the free end of the security chain essentially has a projecting pivot, which is fixed to the handlebar grip. This pivot is designed to retain and immobilise the mounting stud in the free bushing of the security chain. Preferably this pivot comprises two parts housing the internal parts between plus housing an internal part threaded into a hole in the end of the handlebar grip and an external part which is mounted, also by threading, on to the aforementioned internal part. The aforementioned external part has a protruding external section with a smaller diameter with a rebated diametral section, with the aforementioned external section being placed into the hole of the mounting and being housed in the same using the relevant lock.

In addition, this front mounting part may include a series of counterweights and may also include a coupling disk between the free end of the chain and the front mounting part, which is fixed to an antitheft terminal formed by rings.

According to a variation to the preferred embodiment described above, the purpose of this invention consists in an improved antitheft device designed so that the security chain is anchored by its free end to a rear mounting part fitted to a fixed point on the motorcycle in its stowed position. The chain in its operating position is mounted around a fixed point external to the motorcycle such as a post or tree and is appropriately anchored to the same by the free end using the external rear mounting part.

Essentially this variation to the improved antitheft device includes the following parts:
- a jointed part which is held by its lower section to a first fixed point on the motorcycle's bodywork and its upper section is held to the security chain's fixed bushing. These upper and lower jointed parts are joined to each other by relative pivoting methods guaranteeing a full pivoting movement for the fixed bushing on the security chain around the first fixed point on the motorcycle's bodywork;
- an external rear mounting part which is held by one of its ends to the free bushing on the security chain and its other end is anchored/removed from the chain. In its operating position it is mounted around a fixed point external to the motorcycle; and
- a rear mounting part on the free end of the security chain which is fixed to a fixed point on the motorcycles bodywork so that the free end of the security chain can be anchored/removed using a lock when the user wishes to stow the antitheft device.

More specifically, the rear mounting part on the free end of the security chain which is anchored/removed from the aforementioned security chain is formed by a mounting ring which is formed by a slightly oval ring designed to be held and retained by the chain when the latter has been placed around a fixed part external to the motorcycle. The aforementioned ring has an arm attached to one of its ends which extends outwards forming a pivot. This is designed to be introduced and held in a hole in the free bushing on the chain. Moreover, the aforementioned ring has grips which attach and retain the chain by opening and closing the same. These grips are preferably formed by a cut in the ring in a stepped shape so that one of the sections of the ring forms a projection which fit into the matching hole in the other section of the ring.

The first variation to the rear external mounting part is formed by a mountain ring, which includes a curved U-shaped part which is anchored/removed from the mounting part. The curved part has been designed to be held and retained in the chain when the latter has been attached around a fixed external point to them at a cycle. On its respective free ends it has pivots designed to be inserted into holes in the mounting part and anchored by their respective bolts which are placed into holes in the mounting part perpendicular to the first holes with the aforementioned bolts mounted against the rebates in the pivots. Lastly, the aforementioned mounting part is transversally mounted onto a pivot, being placed into a transverse hole in the aforementioned pivot. The pivot is fitted with a pivot which extends longitudinally and has been designed to be inserted into the corresponding hole in the free end mounting of the security chain.

A second variation to the rear external mounting part is formed by the same device stated in the first variation to which has been included a security cable extension. This cable is fixed by one of its ends to an intermediate part and to the pivot on its other end. The aforementioned intermediate part receives transversally the mounting part into a hole for this. However in this case there is no pivot, but an extended body with a hole for the chain section to be fitted. The aforementioned pivot has extended body fitted with a hole so that the end of the chain can be placed inside with the other end of the chain having a pivot which extends in a longitudinal direction to be inserted into the corresponding hole in the mounting stud on the free end of security chain.

A third variation in the rear external mounting part is formed by the same device stated in the first variation where the pivots on the pivoting part has been replaced by a hinge pin equipped with a transverse hole into which a bolt fitted with a mounting stud housed on the free end of the chain.

A fourth variation in the rear external mounting part is formed by the same device stated in the first variation where the pivots on the pivoting part has been replaced by a projection equipped with a transverse hole into which a bolt fitted with a mounting stud housed on the free end of the chain.

The different variants in the embodiments and mounting on the motorcyle's bodywork of the two parts attached to the motorcyle's bodywork -jointed part and rear mounting part- shall be the same as in the preferred embodiment of the anti-theft device.

Other details and characteristics shall be shown throughout the description below referring to drawings attached to this report, which are shown for illustrative but not limiting purposes several practical embodiments of the invention.

### Description of the figures:

Figure 1 is a top plan view of the anti-theft device in the invention in its stowed position.
Figure 2 is a top plan view of the anti-theft device in the invention in its operating position.
Figure 3 is a perspective view of the first embodiment of the jointed part in this invention.
Figure 4 is a top plan view of the jointed part shown Figure 3.
Figure 5 is a side elevation view of the jointed part in figure 3.
Figure 6 is a front elevation view of the jointed part in figure 3.
Figure 7 is a cross section front elevation view of the jointed part in figure 3.
Figure 8 is a cross section and exploded front elevation view showing the jointed part shown in Figure 3, where the layout of the male part inside the female part in its mounted position can be seen. Also included are the washer and the anchoring shaft.
Figure 9 is a perspective view of an variant of the first embodiment of the jointed part purpose of the present invention.
Figure 10 is a front elevation view of the jointed part in figure 9.
Figure 11 is a top plan view of the jointed part shown figure 9.
Figure 12 is a side elevation view of the jointed part in Figure 9.
Figure 13 is a perspective view of a second variant of the first embodiment of the jointed part purpose of the present invention.
Figure 14 is a side elevation view of the jointed part in figure 13.
Figure 15 is a front elevation view of the jointed part in figure 13.
Figure 16 is a top plan view of the jointed part shown figure 13.
Figure 17 is a perspective view of the second embodiment of the jointed part purpose of the present invention.
Figure 18 is a longitudinal cross top section of the jointed part in Figure 17.
Figure 19 is a top plan view of the jointed part shown figure 17.
Figure 20 is an expanded perspective view of a variant of the second embodiment of the jointed part.
Figure 21 is a longitudinal cross top section of the jointed part in figure 20.
Figure 22 is a perspective view of the jointed part of the Figure 17, with un electronic alarm device built in.
Figure 23 is a cross section front elevation view of the jointed part in figure 22.
Figure 24 is a side elevation view of the third embodiment of the jointed part in this invention.
Figure 25 is a front elevation view of the jointed part in figure 24.
Figure 26 is a perspective view of the first embodiment of the rear jointed part purpose of the present invention.
Figure 27 is a front elevation view of the rear mounting part of the Figure no. 29, in the which additionally has been included the fixing screw and the security cover.
Figure 28 is a side elevation view of the rear mounting part in figure 29.
Figure 29 is a top plan view of the rear mounting part of figure 27.
Figure 30 is a top plan view of all possible variants in the chain mounting for the different parts of the anti-theft device, including an external rear mounting part formed by a ring which is anchored/released from the chain, which in turn is attached around an external fixed point to the motorcyle's bodywork.
Figure 31 is a top plan view of the mounting ring of the free bushing on the chain of the anti-theft device of the Figure 30.
Figure 32 is a side elevation view of the mounting ring for the chain bushing on the anti-theft device shown in Figure 30.
Figure 33 is a front elevation view of the mounting ring of the bushing of the chain of the anti-theft device of the Figure 30.
Figure 34 is a cut-away view by U-U in accordance with Figure 33 of the mounting ring of the bushing of the chain of the anti-theft device of the Figure 30.
Figure 35 is a perspective view of the mounting ring for the chain bushing on the anti-theft device shown in Figure 30.
Figure 36 is an exploded perspective view of a first variant of the mounting ring for the chain bushing on the anti-theft device in Figure 30.
Figure 37 is a side view of the mounting ring of Figure 36.
Figure 38 is a cut-away view by W-W in accordance with Figure 37 of the mounting ring of figure 36.
Figure 39 is a perspective view of a second variant of the mounting ring for the chain bushing on the anti-theft device shown in Figure 30, to which a cable extension has been added compared to the first variant.
Figure 40 is a cut-away view of the mounting ring of Figure 39.
Figure 41 is a schematic view of the mounting of the external rear mounting part of Figure 39.
Figure 42 is an exploded perspective view of a third variant of the mounting ring for the chain bushing on the anti-theft device in Figure 30, in which the pivot has been replaced by a hinge pin.
Figure 43 is a side view of the rear external mounting part of Figure 42.
Figure 44 is a cut-away view by Y-Y in accordance with Figure 43 of the rear external mounting part of figure 42.
Figure 45 is an expanded perspective view of a third variant of the mounting ring for the chain bushing on the anti-theft device in Figure 30, in which the pivot has been replaced by a projection.
Figure 46 is a side view of the rear external mounting part of figure 45.
Figure 47 is a cut-away view by X-X in accordance with Figure 46 of the rear external mounting part of figure 45.
Figure 48 is a cross section schematic view of the free bushing on the chain and the front mounting part.

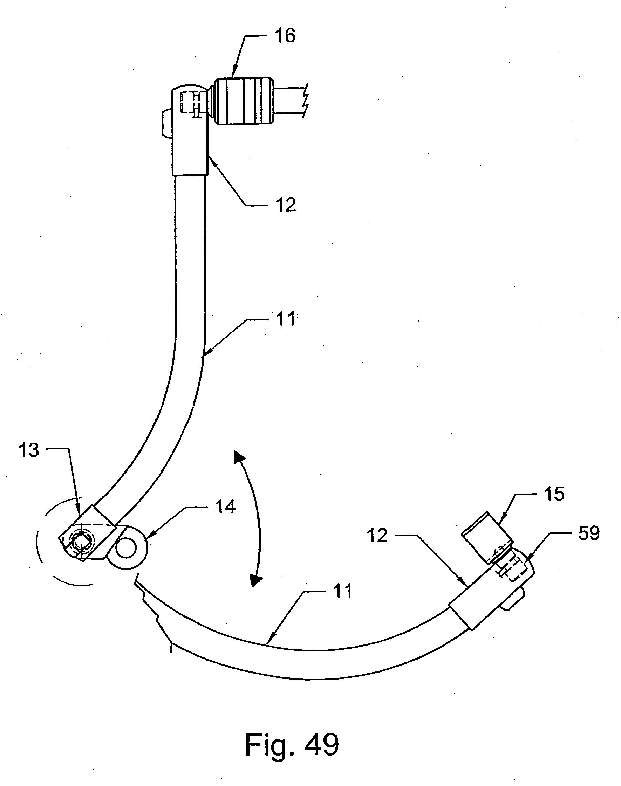

Figure 49 is a schematic view showing the anchoring of the free bushing on the chain to the rear mounting part and to the front mounting part, as well as the mounting of the fixed bushing on the chain to the jointed part.

### Preferred embodiment of the invention:

Below is a list of the main parts of the invention which are shown in the diagrams attached to this report. These are shown with the assistance of the corresponding numbers; (10) antitheft device, (11) security chain, (12) free bushing on the chain (11), (13) fixed bushing on the chain (11), (14, 14', 14'') jointed part, (15) rear mounting part, (16) front mounting part, (17) hole in the body for the jointed part (14), (18) hole in the body for the rear mounting part (15), (19) rear motorcycle bodywork, (20) handlebar grip, (21) male part on the jointed part (14, 14'), (22) female part on the jointed part (14, 14'), (23) anchoring shaft of the jointed part (14, 14'), (24) locking washer or circlip, (25) body of the male part (21), (26) rear hole on male part (21), (27) front hole on the male part (21), (28) lower section of the female part (22), (29) upper section of the female part (22), (30) inner hole of the lower section (28), (31) end hole of the upper section (29), (32) machined slot on the lower section (28), (33) expanded perimeter section of the inner hole (30), (34) lower threaded section of the male part (21), (35) upper base of the lower section (22), (36) intermediate part, (37) projecting section of the upper section (29), (38) sloping extension on the intermediate part (36), (39) security support, (40) security plate, (41) security block, (42) plate mounting screw, (43a, 43b) support joint screws, (44a, 44b) security block holes (41), (45) blind hole in the security block (41), (46a,46b) plate holes (40), (47) plate hole (40), (48) plate hole (40), (49) security block hole (41), (50a, 50b) plate extensions (40), (51) extension anchoring pivot (50a), (52a, 52b) through-holes in the extension (50a, 50b), (53) electronic alarm device, (54) lower part of the jointed part (14''), (55) upper section of the jointed part (14''), (56) upper part of the jointed part (14''), (57) hole in the upper part (56), (58) plate for the rear mounting part (15), (59) mounting pivot for the rear mounting part (15), (60) support for the rear mounting part (15), (61) through hole in the support (60), (62) inclined section, (63) screw mounting for the rear mounting part (15), (64) mounting screw cover (63), (65) front mounting part pivot (16), (66) mounting of the free bushing (12), (67) internal part of the pivot (65), (68) external part of the pivot (65), (69) external section of the external part (68), (70) rebated section of the external section (69), (71) counterweights for the front mounting part (16), (72) hole in the intermediate part (36), (73) mounting stud hole (66), (74) coupling disk, (75) antitheft terminal, (100) external mounting antitheft device, (111) security chain, free bushing (112), fixed bushing (113), (114) jointed part, (115) rear mounting part, (116) front mounting part, (120) handlebar grip, (180) external fixed point, (181', 181'', 181''', 181'''') external rear mounting part, (182) mounting ring for the free bushing (112), (183) ring for the mounting ring (182), (184) arm for the mounting ring (182), (185) arm pivot (184), (186a, 186b) ring grips (183), (187a, 187b) ring projection (183), (188a, 188b) rebate for the ring (183), (189) mounting ring, (190) curved part, (191) mounting part, (192a, 192b) pivots, (193a, 193b) longitudinal holes for the mounting part (191), (194a, 194b) bolts, (195a, 195b) holes for the mounting part, (196) pivot, (197) pivot, (198) security cable section, (199) intermediate part pivot (200), (200) pivot, (201) pivot, (202) hole, (203) hinge pin, (204a, 204b) holes of the hinge pin (203), (205) projection, (206) transverse hole in the projection (205), (207) transverse hole of the pivot (196).

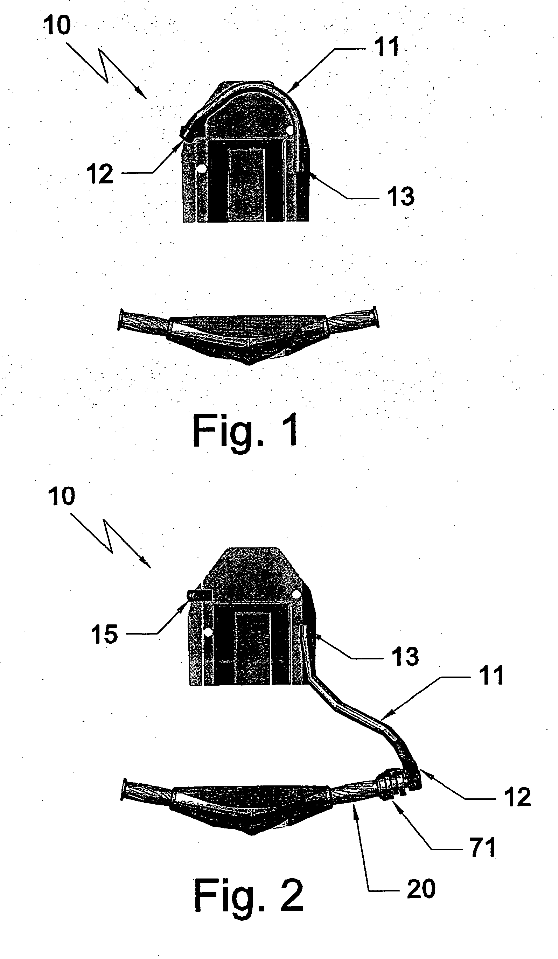

As may be seen in Figures 1 and 2, the improved anti-theft device (10) essentially comprises a jointed part (14) and a rear mounting part (15) on the free end of the security chain (11) which are fixed at two different points on the rear section of the motorcycle's body (19), and one front mounting part (16) on the free end of the security chain (11) which is fixed to the end of the handlebar grip (20). Fitting these parts means that in the stowed position (Figure 1) the security chain (11) is positioned around the rear of the driver's seat and its free bushing (12) is anchored onto the aforementioned rear mounting part (15); On the other hand when the user wants to fit the anti-theft device (10) in its operating position (Figure 2), he turns the security chain to make it pivot on its fixed bushing (13) until anchoring its free bushing (12) onto the front mounting part (16).

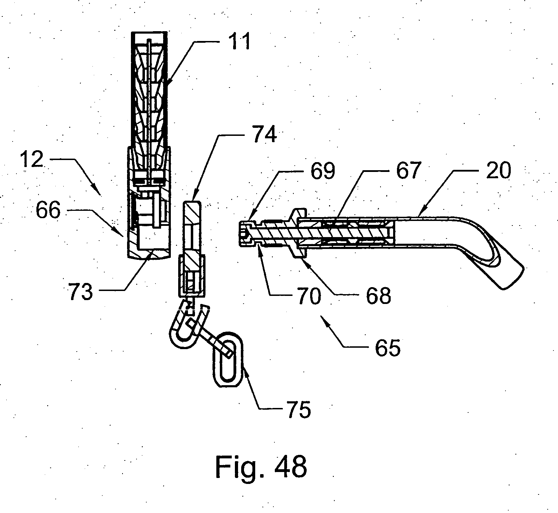

The free end of the security chain (11) has a mounting formed by a bushing (12), in which there are two longitudinal holes, one of which (73) contains and holds the mounting pivot for the front mounting part (16) or rear mounting part (15) using the corresponding lock with the other hole being designed to house and retain the chain (11), see Figure 48.

The fixed end of the security chain (11) includes a bushing (13) inside which there is a rear hole to house and retain the fixed end of the chain. On the rear section this bushing has a longitudinal groove in an axial direction to receive and hold the rotating section of the jointed part (14).

For its part, the jointed part (14) is held by its lower section to the first fixed point on the motorcycle's body (19), with its upper section being held to the fixed bushing (13) of the security chain (11), so that the jointed movement is guaranteed by the full pivoting movement of the fixed bushing (13) on the security chain (11) around the first fixed point on the motorcycle's body (19).

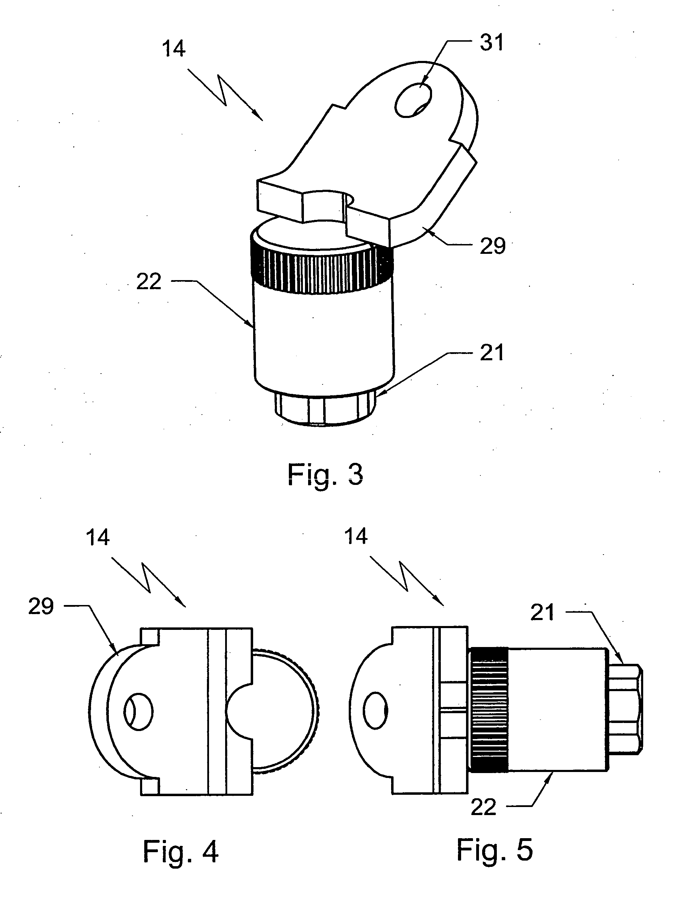

According to the first preferred embodiment of the jointed part (14), and as may be seen in Figures no. 3-16, the latter is formed by a male part (21) designed to receive the upper end of an anchoring shaft (23) which is fixed inside a hole (17) on a point on the motorcycle's body (19), and by a female part (22) which is mounted around the aforementioned male part (21) and is held by it using a locking washer or circlip (24). Therefore, both male (21) and female (22) parts are mounted without any chance of becoming separated axially, but with relative rotation between both. The female part (22) is designed to rotate on the fixed part of the male anchoring shaft thereby allowing the free bushing (13) of the security chain (11) to rotate.

The aforementioned male (21) part has a generally cylindrical body (25) and is fitted with a rear hole (20) designed to receive the anchoring shaft (23) and a front hole (27) designed to perfectly match a special key such as an Allen key which when turned fled the male part (21) around the anchoring shaft (23).

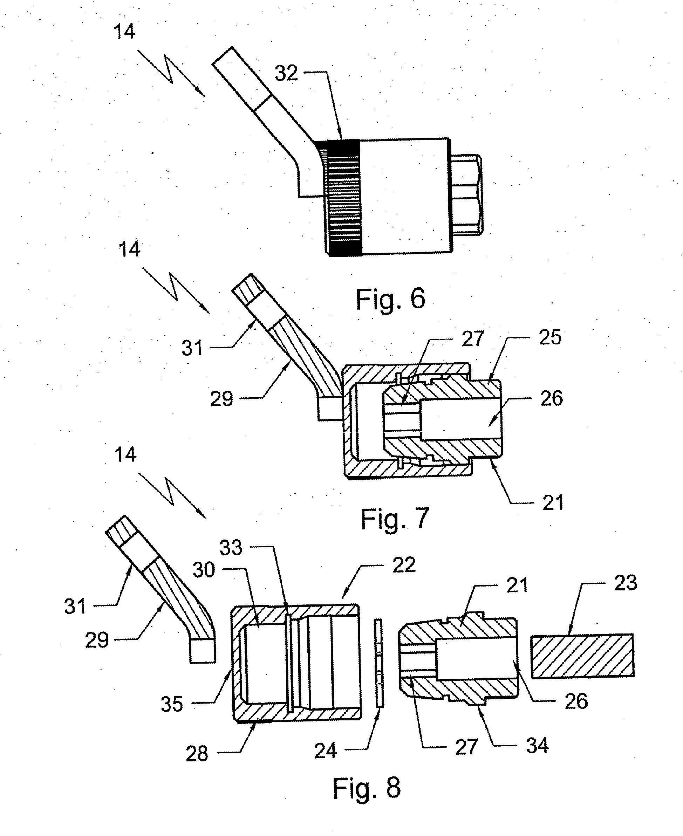

The aforementioned female part (22) has a body formed by a two different parts is solidly held together with: a lower (28), generally cylindrical section fitted with an inner hole (30) which is formed from the lower base and matches at the shape of the male part. It also has an upper section (29) which is generally curved joining the upper base of the lower section (28) and extending upwards. This is fitted with a hole (31) in the perception into which the fixed bushing (13) of the security chain (11) is fixed. The aforementioned lower section (28) has on its exterior surface an upper milled slot (32), see Figure 6.

In the inner hole (30) of the lower section (28) there is an expanded perimeter section (33) in the centre forming a housing designed to receive the aforementioned locking washer or circlip (24) which fully fit into the same. The purpose of this is to hold both male and female parts with one another in an axial direction in the assembled position but with the possibility of relative rotation between both. Due to this specific layout, a pivoting movement is achieved on the upper section (22) of the jointed part (14) relative to its fixed lower section (21).

As may be seen in Figure 7, the external surface of the body (25) of the male part (21) has a protruding lower section (34) which has been threaded so that the mounting position butts up against the inner surface interior of the inner hole (30) on the lower section (28) of the female part (22).

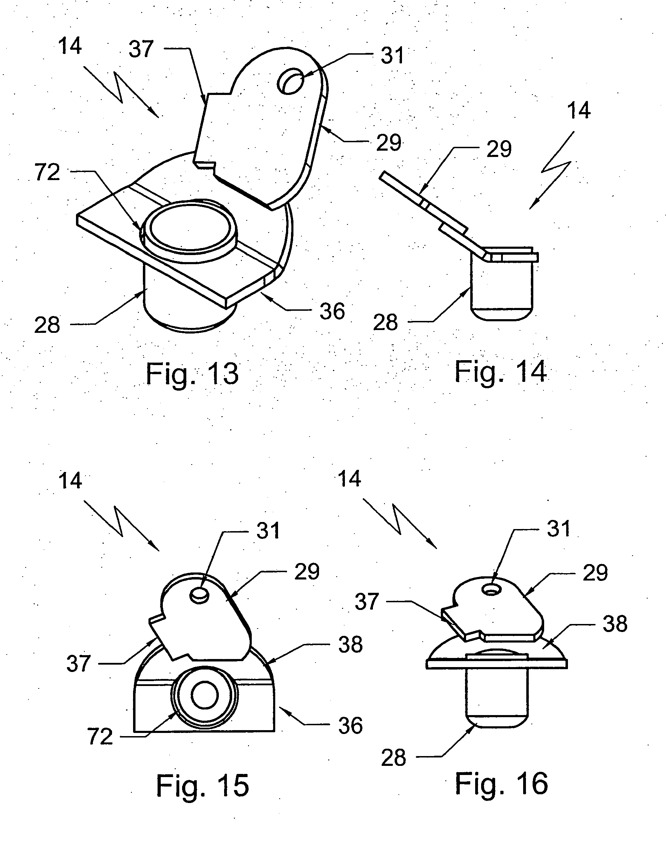

The solid joint between the upper section (29) and the lower section (22) is achieved by the upper base (35) of the aforementioned lower section (22) directly using joints such as welding (see Figures 3-12), or using an intermediate part (36) (see Figures 13-16). The aforementioned intermediate part (36) has a slightly flat shape with a sloping extension (38) and is placed in a slightly perpendicular position to the upper base (35) on the lower section (28) of the female part (22). The aforementioned upper section (29) is solidly attached to end of the sloping extension (38) on the intermediate part (36), whereas the flat section of the intermediate part (36) is joined to the lower section (28) of the female part (22) by inserting and immobilising the upper area of the aforementioned lower section (28) in a hole (72) in the flat section of the intermediate part (36).

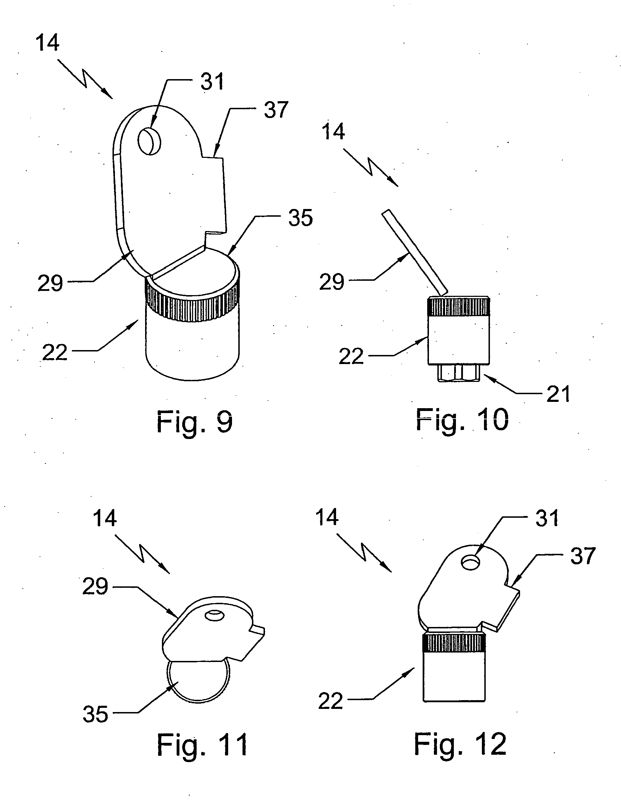

As may be seen in Figures 9-16, the configuration of the upper section (29) may include a projecting section (37) on one of its sides.

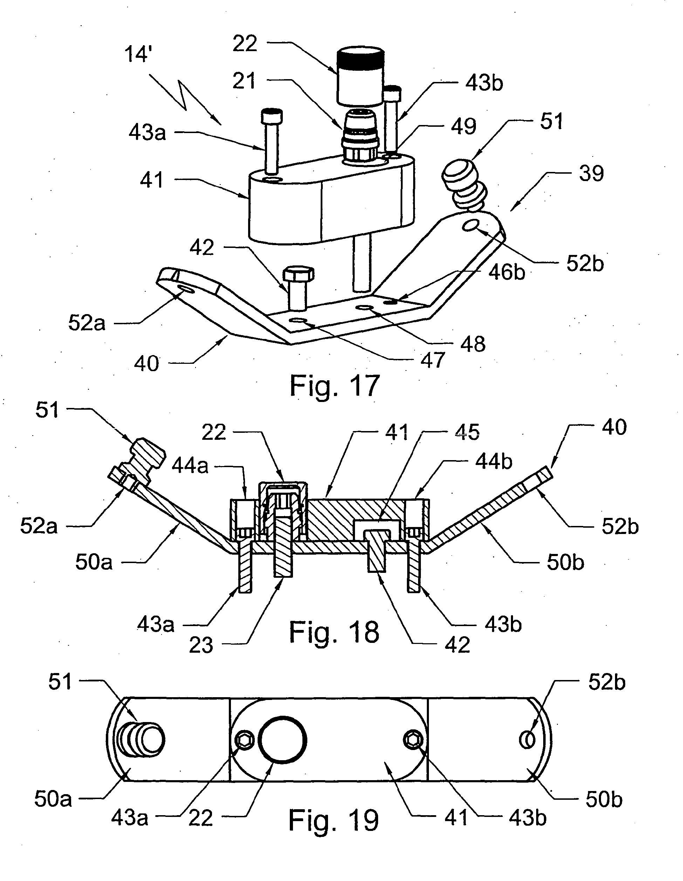

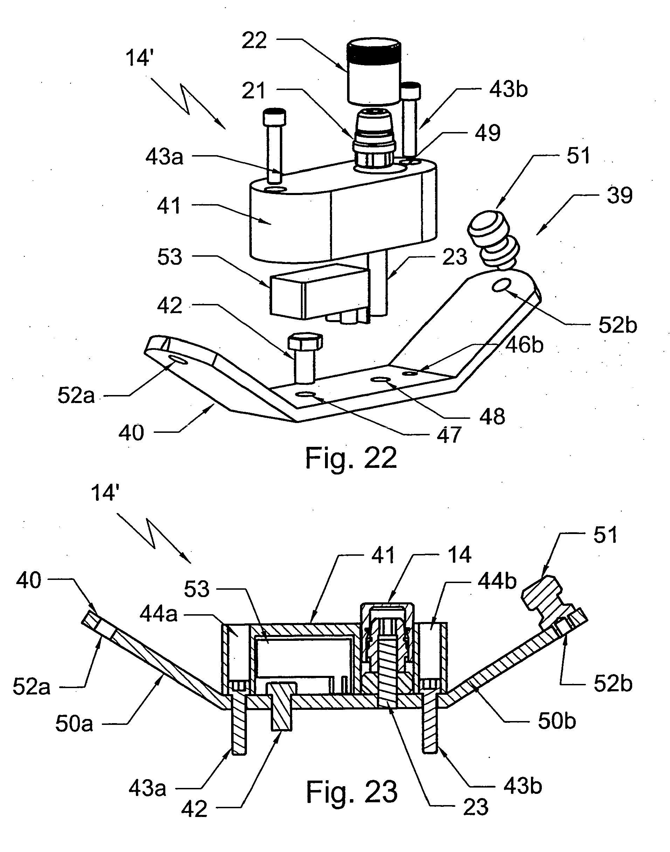

According to a second preferred embodiment of the jointed part (14') and as may be seen in Figures 17-23, the embodiment is formed by the jointed part (14) described in the first embodiment, to which a security support (39) has been added which is fixed to the motorcyle's bodywork. The aforementioned security support (39) is formed by a thin, flat security plate (40) which is fixed to the motorcycle's bodywork by a plate fixing screw (42). A security block (41) is mounted and fixed on top of this using support joint screws. These support joint screws (43a, 43b) are inserted into their respective holes (44a, 44b) in the upper section of the security block (41) and then into matching holes in the plate (40), placing the support joint screws in the mounting position (43) supported against the upper base of the plate (40).

Preferably, the heads of these support joint screws (43a, 43b), which are supported on the upper base of the plate (40), are protected against any outside tampering by inserting some small balls or milled pivots, not shown in the figures, which are housed inside the same.

Moreover, these security block (41) includes another hole (49) to house the jointed part (14). The plate (40) also is equipped with a hole (48) to allow the shaft (23) to pass through mounted on the aforementioned jointed part which is fixed to the motorcyle's bodywork.

Moreover, the lower section of the security block (41) is fitted with a blind hole (45) to house the head of fee plate mounting screw (42), a shaft of which is inserted into her bodywork passing through a hole (47) drilled in the plate (40).

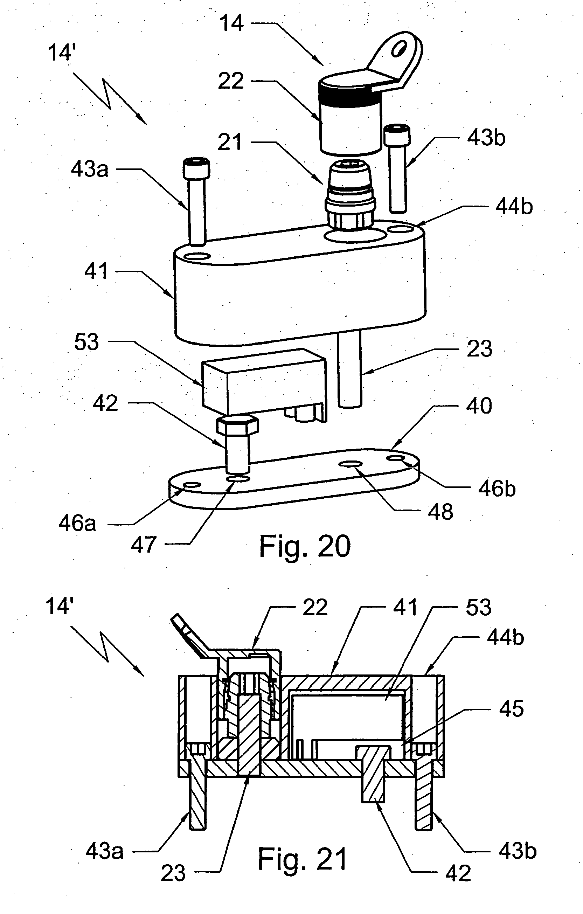

The security plate (40) may be flat, as shown in Figures 20-21, or include on its ends two extensions (50a, 50b) in the form of wings which are sloping compared to the central body of the plate, see Figures 17-19 and 22-23. Both extensions (50a, 50b) have their respective through-holes (52a, 52b) on their free ends which are used to anchor an anchoring pivot (51) using a screw or similar device. This pivot extends from the upper section into one of the two extensions (50a, 50b).

As an option, and as may be seen in Figures no. 20-23, an electronic alarm device (53) may be included inside the security block (41) which activates a sound when it is tampered with. In order to be able to appropriately house the aforementioned electronic alarm device (53), the blind hole (45) in the security block (41) shall be sized so that it is able to house both the plate mounting screw head (42) and the electronic alarm device (53).

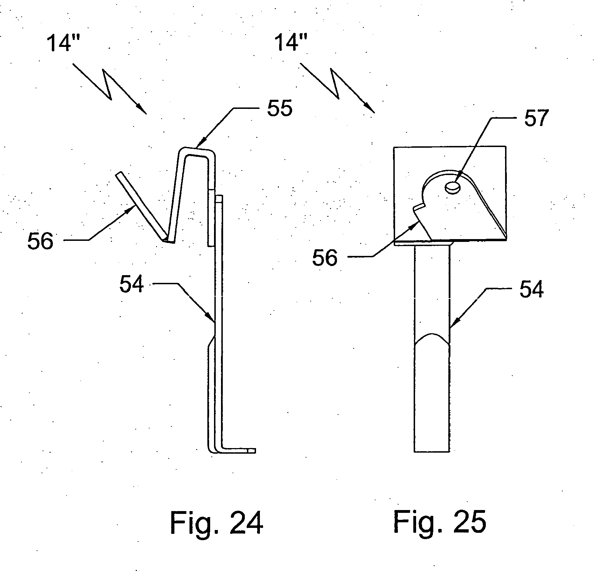

According to a third preferred embodiment for the jointed part (14"), and as may be seen in Figures 24-25, the embodiment has been designed to be fixed on its inner side to the motorcycle housing, not shown in the figures. The aforementioned jointed part (14'') is formed by an extended lower part (54) which is firmly joined at the top to an upper section (55) in the shape of an inverted "u", and an extended, rotating upper part (56) which is joined and jointed from the external base of the inverted "u" (55) section and extending in a slight slope outwards.

The lower end of the aforementioned lower part (54) is fixed to a hole in one point of the housing, not shown in the Figures.

The aforementioned tilting part (56) is fitted with a hole (57) on its most exterior section to be able to attach the fixed bushing (13) on the security chain (11).

In one of the three embodiments of the described jointed part (14, 14', 14''), the joint between the hole of the upper rotating section and the bushing (13) on the fixed end of the security chain (11) is preferably by a circlip or locking washer, not shown in the attached figures.

The rear mounting part (15) on the free end of the security chain (11), is held at a second point on the motorcycle's bodywork designed to anchor the free bushing (12) on the chain (11) when the user wishes to stow the antitheft equipment (10a), see Figures 1-2.

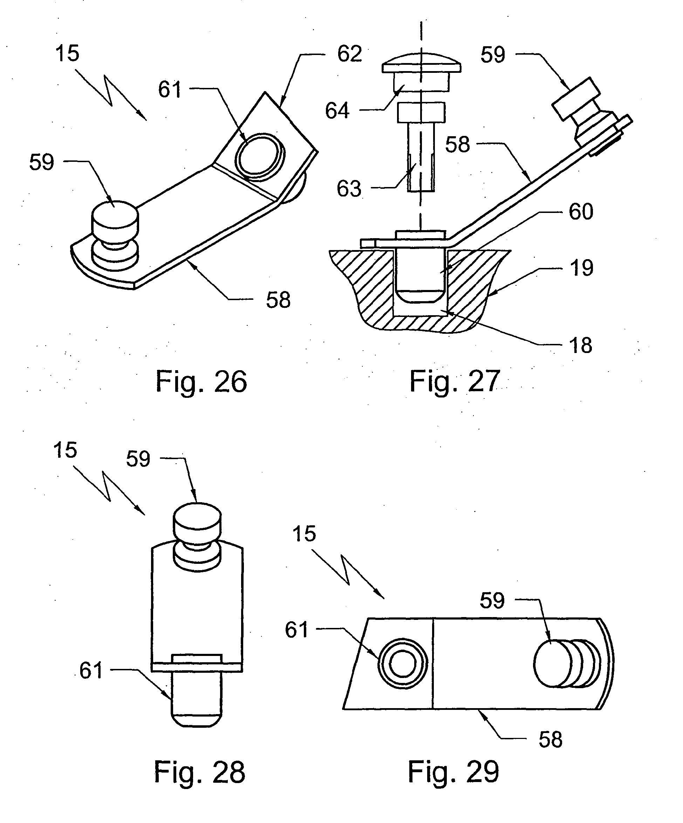

According to one preferred embodiment, the rear mounting part (15) is formed by a solid part formed by a plate (58), mounting pivot (59) on the outermost end of the aforementioned plate and perpendicular to it and one extended support (60) with a through hole (61) on the lower end of the aforementioned plate (58) and perpendicular to the same. The aforementioned mounting pivot (59) has been designed to be inserted in the corresponding hole in the mounting of the free end of the security chain (11). The aforementioned support (60) has been designed to fully entered and held in a second hole (18) in the rear section of the motorcycle's body (19), mounted using a screw (63), see Figure no. 27, which is inserted in the support (60) and threaded in the aforementioned second hole. In addition, a cover (64) is fitted, see Figure 27, which completely fits the upper edge of the support (60) so that the support's opening (60) is fully covered and the screw (63) is protected against any possible oxidation.

This plate (58) has a section which is folded (62) upwards, in order to facilitate the anchoring of the mounting pivot (59) to the free bushing (12) of the security chain (11).

As may be seen in Figure 27, the folded section (62) of the aforementioned plate (58) is mounted and supported horizontally on the motorcyle's bodywork and with the support (60) inserted in the second hole (18) of the body (19).

In order to attach the support (60) to the second hole (18) of the body (19), the rear mounting part (15) is first placed in position with the support introduced into the aforementioned second hole (18). Then the screw mounting (63) is placed in and screwed into the second hole (18), and finally the upper section of the aforementioned screw (63) is covered by a security cover (64) to protect the screw (63) against oxidation.

As shown in the Figure 48, the free bushing (12) of the chain (11) to the aforementioned rear mounting part (15) is anchored by inserting the pivot (59) into the hole (73) of the free bushing (12) using the relevant lock, not shown in the attached figures.

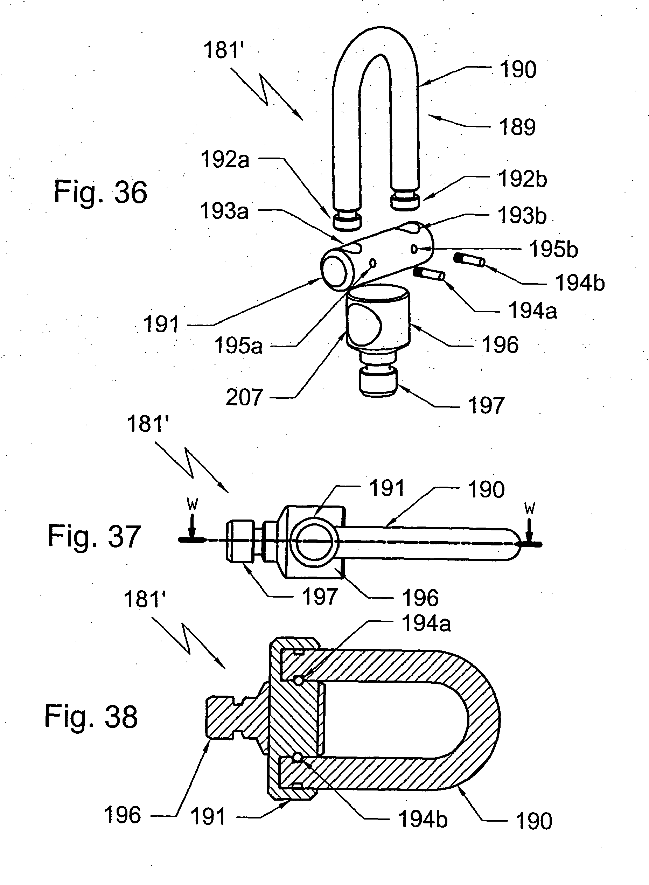

For its part, the front mounting part (16) on the free end of the security chain (11) essentially has a projecting pivot (65) which is fixed to the handlebar grip (20). The aforementioned pivot (65) has been designed to hold and immobilise the mounting (66) in the free bushing (12) of the chain (11). The aforementioned pivot (65) is formed by two parts which fit into each another, an internal part (67) which is screwed into a hole in the free end of the handlebar grip (20) and one external part (68) which is mounted onto the aforementioned internal part (67) also by screwing it in. The aforementioned external part (68) has a protruding external section (69) with a smaller diameter with a rebated diametral section (70), with the aforementioned external section (69) being placed into the hole (73) of the mounting (66) and being housed in the same using the relevant lock (not shown in the figures), see Figures 36-37.

In addition, the aforementioned front mounting part (16) may have a coupling disk (74) which is fixed to an antitheft terminal (75), see Figure 36.

The aforementioned front mounting part (16) may also have a series of counterweights (71), shown in Figures 1-2.

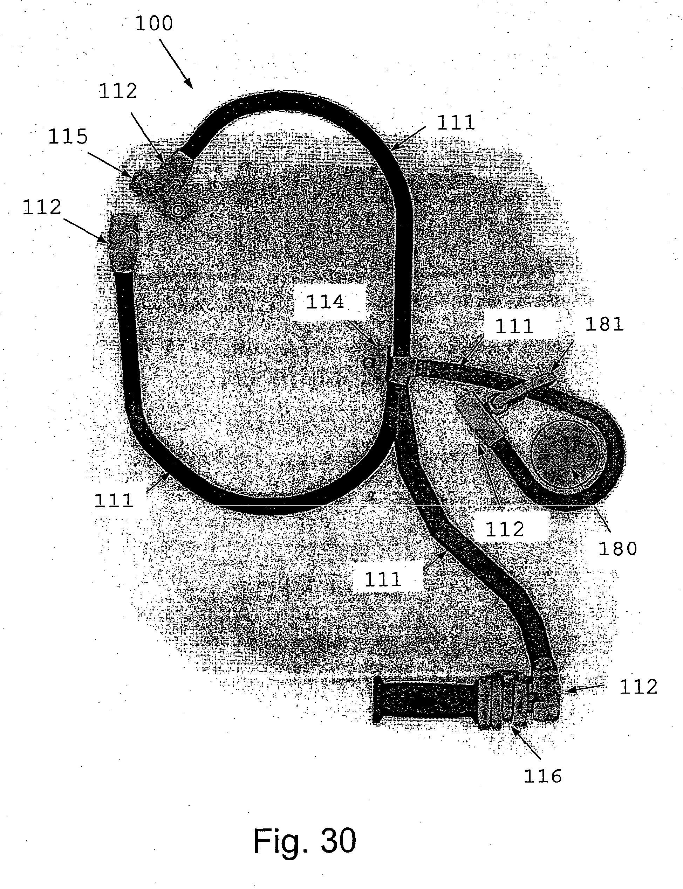

As shown in Figure 30 is a variation (100) of the preferred embodiment of the anti-theft device in the invention (10) which has been designed so that the free bushing (112) of the security chain (111) is solidly fixed to an external rear mounting part (181), which, when in its operating position, the user may anchor/release the chain (111) which is attached around a fixed point external to the motorcycle (180). In the same Figure 30 other options are also shown for mounting the chain (111): in its stowed position the rear mounting part (115) either by placing it around the front of the driver's seat or on the rear section, or in its anchored operating position to the front mounting part (116) (preferred embodiment).

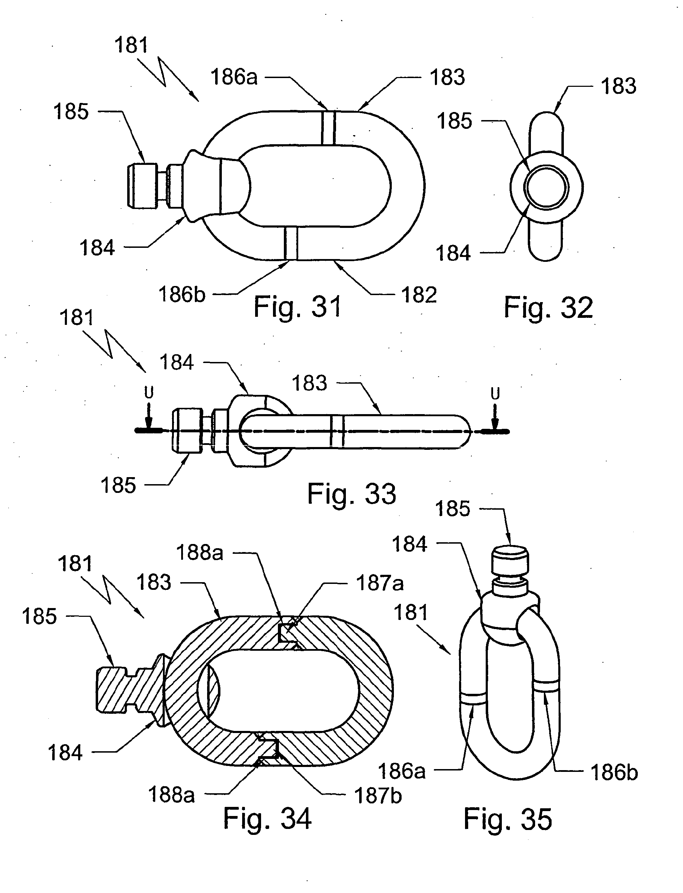

According to a preferred embodiment the rear external mounting part (181), shown in Figures 31-35, is formed by a mounting ring (182), which includes a ring shaped part (183) with a slightly oval shape designed to attach and hold the chain (111) when it is placed around the fixed part external to the motorcycle. The aforementioned ring (183) has an arm (184) attached to one of its ends which extends outwards forming a pivot (185). This is designed to be introduced and held in a hole in the free bushing (112) on the chain (111). Moreover, the aforementioned ring (183) has grips (186a, 186b) which attach and retain the chain (111) by opening and closing the same. These grips (186a, 186b) are preferably formed by a cut in the intermediate sections of the ring (183) in a stepped shape so that one of the sections of the ring (183) forms respective projection (187a, 187b) which fit into the respective matching holes (188a, 188b) in the other section of the ring (183).

As shown in Figures 36-38, the first variant of the external rear mounting part (181') is formed by a mounting ring (189), includes a "U" shaped curve (190) which is anchored/released from a mounting part (191). The curved part (190) has been designed to be attached and retained in the chain (111) when it is placed around a part external to the motorcycle (180). It has pivots (192a, 192b) on its two free ends designed to be inserted into respective longitudinal holes (193a, 193b) in the mounting part (191) with these pivots (192a, 192b) being anchored by bolts (194a, 194b) which are placed into the respective holes (195a, 195b) in the mounting part perpendicular to the first holes (193a, 193b). In this way, the bolts (194a, 194b) are mounted against the rebated sections of the pivots (192a, 192b). Lastly, the aforementioned mounting part (191) is transversally mounted onto a pivot (196), being placed into a transverse hole (207) in the aforementioned pivot (196). The pivot (196) is fitted with a pivot (197) which extends longitudinally and has been designed to be inserted into the corresponding hole in the free bushing mounting (112) of the security chain (111).

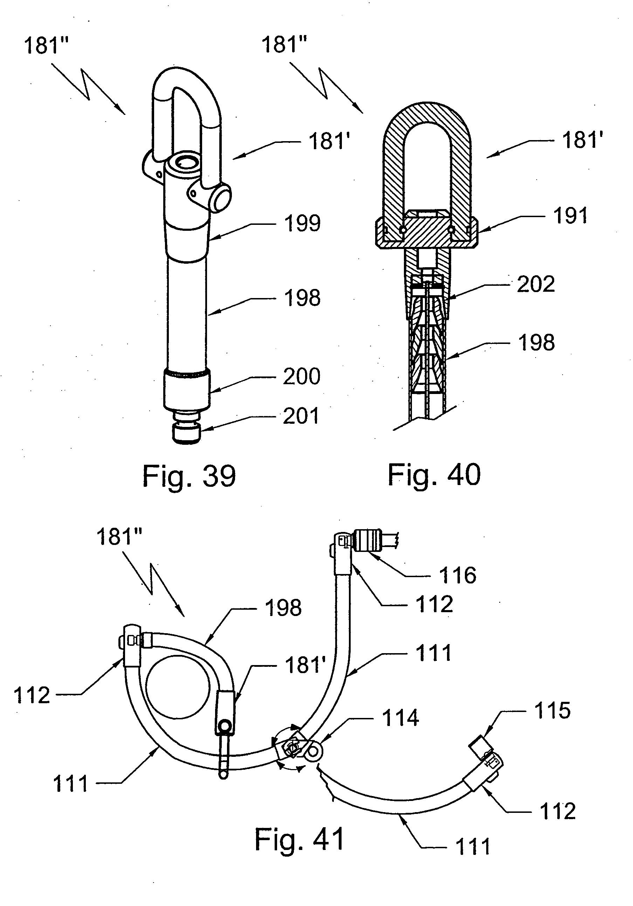

As shown in Figures 39-40, a second variant of the external rear mounting part (181'') is formed by the same external rear mounting part (181'), to which has been added an extension or section of security cable (198). The cable section is mounted (198) by one of its ends to an intermediate part (199) and by the other end to a pivot (200). The aforementioned intermediate part (199) receives transversally the mounting part (191) into a hole for this. However in this case there is no pivot, but an extended body with a hole (202) for the chain section (198) to be fitted. For its part, the aforementioned pivot (200) has an extended body with a hole to house the other end of the chain section (198) with the other end having a pivot (201) which extends longitudinally to be inserted into the corresponding hole in the mounting of the free bushing (112) of the security chain (111).

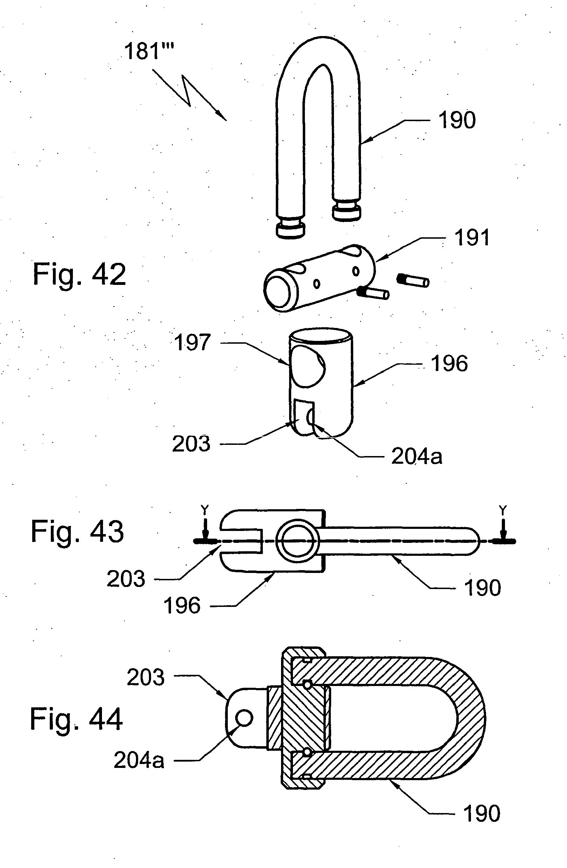

As shown in Figures 42-44, a third variant of the external rear mounting part (181''') is formed by the same external rear mounting part (181'), in the which the pivot (197) of the pivot (196) has been replaced by a hinge pin (203) with holes (204a, 204b). This houses a pivot with a pin fitted to the mounting of the free bushing (112) of the security chain (111), not shown in the attached figures.

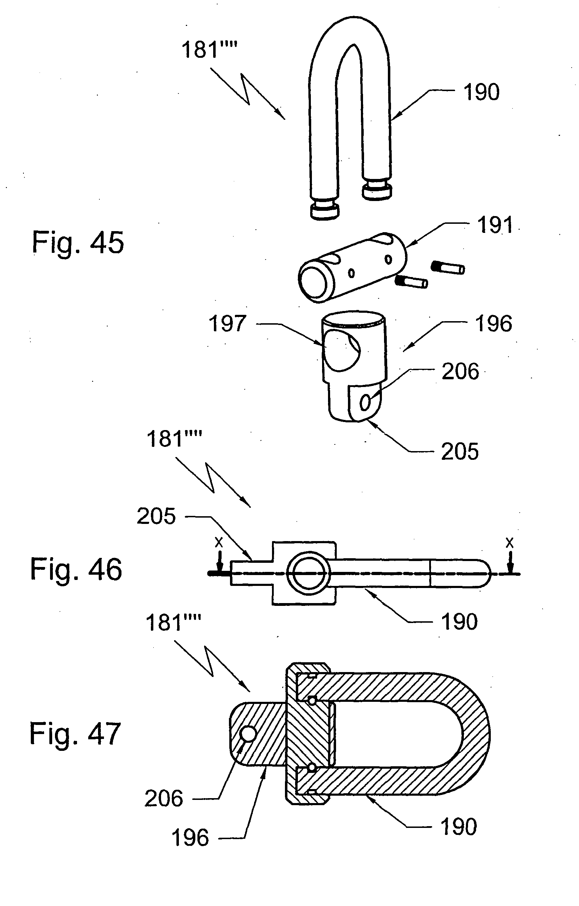

As shown in Figures 45-47, a fourth variant of the external rear mounting part (181'''') is formed by the same external rear mounting part (181'), in the which the pivot (197) of the pivot (196) has been replaced by a projection (205) with a transverse hole (206). This houses a pivot with a pin fitted to the mounting of the free bushing (112) of the security chain (111), not shown in the attached figures.

The different variants in the embodiments and mounting on the motorcyle's bodywork of the two parts attached to the motorcyle's bodywork -jointed part (114) and rear mounting part (115)- shall be the same as in the preferred embodiment of the anti-theft device (10).

Having sufficiently described this invention using the Figures attached, it is easy to understand that any changes judged to be suitable may be made, whenever these changes do not alter of the essence of the invention summarised in the following claims.

## Claims

1. "IMPROVED ANTI-THEFT DEVICE FOR MOTORCYCLES" which are formed by a jointed cable or security chain held by one of its ends to a fixed point on the frame of the motorcycle, and its free end is anchored to the handlebar grip in its operating position or to a other fixed point on the motorcycle's chassis in its stowed position. Both ends of the chain have their respective mounting bushings inside which there are two longitudinal holes, one of which is used to house and retain the front mounting's mounting pivot or the rear mounting using its lock, with the other to house and retain the chain, **characterised by** the fact that it comprises:
- a jointed part (14) which is held by its lower section to a first fixed point on the motorcycle's bodywork and its upper section is held to the security chain's (11) fixed bushing (13); these upper and lower jointed parts (14) are joined to each other by relative pivoting methods guaranteeing a full pivoting movement for the fixed bushing (13) on the security chain (11) around the first fixed point on the motorcycle's bodywork;
- a rear mounting part (15) on the free end of the security chain (11) which is held to a second fixed point on the motorcycle's bodywork which has appropriate anchoring measures to anchor/release the free bushing (12) on the chain (11) from the rear mounting part (15) when the user wishes to stow the anti-theft device; and
- a front mounting part (16) on the free end of the security chain (11) which is held to the handlebar grip (20); this has appropriate anchoring measures to anchor/release the free bushing (12) on the chain (11) from the front mounting part (16) when the user wishes to stow the antitheft device (10).

2. "IMPROVED ANTI-THEFT DEVICE FOR MOTORCYCLES" according to the Claim one, **characterised by** the fact that the second fixed point on the motorcycle's bodywork where the rear mounting part is immobilised near to the rear of the motorcycle's seat so that when the anti-theft device (10) is in its stowed position, the security chain (11) is placed around the front or rear of the seat.

3. "IMPROVED ANTI-THEFT DEVICE FOR MOTORCYCLES" according to the Claim one, **characterised by** the fact that the jointed part (14) is formed by a male part (21) designed to receive the upper end of an anchoring shaft (23) which is fixed to the inside of a hole (17) in a point on the motorcycle's body (19), and by un female part (22) which is mounted around the aforementioned male part (21) and is retained and made secure by the same using a locking washer (24); this female part (22) is designed to rotate on the solid male part (21)-anchoring shaft (23), so that both the male (21) and female (22) parts are assembled with relative rotation between both.

4. "IMPROVED ANTI-THEFT DEVICE FOR MOTORCYCLES" according to the Claim three, **characterised by** the fact that the male part (21) has a generally cylindrical body with a lower threaded section (34) which butts up against the inner surface of the inner hole (30) on the lower section (28) of the female part (22), and the aforementioned male part (21) is fitted with a rear hole rear (20) designed to receive the anchoring shaft (23), and a front hole (27) designed so that it perfectly matches a special key so that when it is turned the male part (21) is threaded around the anchoring shaft (23).

5. "IMPROVED ANTI-THEFT DEVICE FOR MOTORCYCLES" according to the claim three, **characterised by** the fact that the female part (22) has a body formed by a two different parts is solidly held together with: a lower (28), generally cylindrical section fitted with an inner hole (30) which is formed from the lower base and matches at the shape of the male part; it also has an upper section (29) which is generally curved joining the upper base of the lower section (28) and extending upwards; this is fitted with a hole (31) in the perception into which the fixed bushing (13) of the security chain (11) is fixed; optionally the lower portion (28) has on its exterior surface an upper milled slot (32); and optionally in the inner hole (30) of the lower section (28) there is an expanded perimeter section (33) in the centre forming a housing designed to receive the aforementioned locking washer (24) which fully fit into the same.

6. "IMPROVED ANTI-THEFT DEVICE FOR MOTORCYCLES" according to the claim five, **characterised by** the fact that the solid joint between the upper section (29) and the lower section (22) is achieved by the upper base (35) on the aforementioned lower section (22) using a welded joint.

7. "IMPROVED ANTI-THEFT DEVICE FOR MOTORCYCLES" according to the claim three, **characterised by** the fact that the solid joint between the upper section (29) and the lower section (22) is achieved by an intermediate part (36); and the intermediate part (36) has a slightly flat shape with an inclined extension (38) and is placed in a slightly perpendicular position to the upper base (35) on the lower section (28) of the female part (22), the aforementioned upper section (29) is solidly fitted to the end of the sloping extension (38) of the intermediate part (36), whereas the flat section of the intermediate part (36) is joined to the lower section (28) of the female part (22) by inserting and immobilising the upper area of the aforementioned lower section (28) in a hole (72) in the flat section of the intermediate part (36).

8. "IMPROVED ANTI-THEFT DEVICE FOR MOTORCYCLES" according to the claims one and three, **characterised by** the fact that the jointed part (14') is formed by the jointed part (14) which includes the security support (39) which is fixed to the motorcycle's bodywork, forming the security support (39) with a thin, flat security plate (40) which is mounted onto the motorcycle's bodywork by a plate mounting screw (42), the upper section of which holds a security block (41) using support joint screws (43), the security block (41) also includes another hole (49) designed to house the jointed part (14), and the plate (40) equipped with a hole (48) to pass the shaft (23) through the lower side of the security block (41) with a blind hole (45) designed to house the head of the plate mounting screw (42), the shaft of which is inserted in the bodywork through a hole (47) in the plate (40); and optionally it includes an electronic alarm device (53) with a blind hole (45) in the inner section of the security block (41).

9. "IMPROVED ANTI-THEFT DEVICE FOR MOTORCYCLES" according to the claim eight, **characterised by** the fact that support joint screws (43a, 43b) are inserted into their respective holes (44a, 44b) in the upper section of the security block (41) and then into matching holes in the plate (40), placing the support joint screws in the mounting position (43) supported against the upper base of the plate (40); and optionally the heads of the support joint screws (43a, 43b) are protected against tampering form the outside by inserting balls of machined pivots inside.

10. "IMPROVED ANTI-THEFT DEVICE FOR MOTORCYCLES" according to the claim eight, **characterised by** the fact that the security plate (40) has a flat shape with extensions (50a, 50b) at each end forming wings which extend as a slope compared to the central body of the plate (40), with both extensions (50a, 50b) on their free ends having through-holes (52a, 52b), designed to anchor an anchoring pivot (51) using a screw or similar with one of the two extensions projecting out of he upper section (50a, 50b).

11. "IMPROVED ANTI-THEFT DEVICE FOR MOTORCYCLES" according to the claim 1, **characterised by** the fact that the jointed part (14'') is formed by a lower part (54) with an extended shape which is fixed at the top to the upper section (55) in the shape of an inverted "U" and a rotating upper part (56) which is jointed and connected to from the external base of the inverted "U" shape (55) extending and slightly sloping down outwards; the jointed part (14'') is designed to be solidly mounted on its inner side to the motorcycle's housing with its upper tilting section (56) a hole (57) on its most external side so that the fixed bushing (13) of the security chain (11) can be attached, and optionally the lower end of the aforementioned lower part (54) is fixed to a hole in one point of the housing.

12. "IMPROVED ANTI-THEFT DEVICE FOR MOTORCYCLES" according to the claim 1, **characterised by** the fact that the rear mounting part (15) is formed by a solid part comprising a plate (58), a mounting pivot (59) mounted on the external end of the aforementioned plate and perpendicular to the same, and an extended support (60) with a through hole (61) on the lower end of the aforementioned plate (58) and perpendicular to the same. This mounting pivot (59) has been designed to be inserted inside the relevant hole in the mounting of the free end of the security chain (11), and the support (60) has been designed to be completely inserted into and held by a second hole (18) in the rear section of the motorcycle's body (19) by a screw (63) and a cover (64) covering the support's opening (60), and optionally the plate (58) has an upward folded section (62) which has been designed to be mounted and supported horizontally to the motorcycle's bodywork and with the support (60) inserted in the second hole (18) of the body (19).

13. "IMPROVED ANTI-THEFT DEVICE FOR MOTORCYCLES" according to the claim 1, **characterised by** the fact that the front mounting part (16) is formed by a projecting pivot (65) which is fixed to the free end of the handlebar grip (20), with this pivot (65) being designed to retain and immobilise the mounting (66) in the free bushing (12) of the chain (11) and the aforementioned pivot (65) being formed by two parts which solidly hold an internal part (67) which is threaded into a hole in the free end of the handlebar grip (20) and an external part (68) which is mounted onto the aforementioned internal part (67) also by threading. The aforementioned external part (68) has a projecting external section (69) with a smaller diameter with rebated diametral section (70). This external section (69) is placed inside the hole (73) in the mounting (66) and is housed n the same using the corresponding lock, and additionally the front mounting part (16) includes a coupling disk (74) which is joined to an antitheft terminal (75), and additionally the front mounting part (16) includes a series of counterweights.

14. "IMPROVED ANTI-THEFT DEVICE FOR MOTORCYCLES" which is formed by a cable or jointed security chain which is held at one of ends to a fixed point on the motorcycle's chassis, and its free end is anchored to another fixed point on the motorcycle's frame in its stowed position or to a fixed point external to the motorcycle's chassis in its operating position, **characterised by** the fact that it comprises:
- a jointed part (114) which is held by its lower section to a first fixed point on the motorcycle's bodywork and its upper section is held to the security chain's (111) fixed bushing (113); these upper and lower jointed parts (114) are joined to each other by relative pivoting methods guaranteeing a full pivoting movement for the fixed bushing (113) on the security chain (111) around the first fixed point on the motorcycle's bodywork;
- a rear mounting part (115) on the free end of the security chain (111) which is held to a second fixed point on the motorcycle's bodywork which has appropriate anchoring measures to anchor/release the free bushing (112) on the chain (111) from the rear mounting part (115) when the user wishes to stow the anti-theft device; and
- an external rear mounting part (181) which is held by one of its ends to the free bushing (112) on the security chain (111) and its other end is anchored/removed from the chain (111). In its operating position it is mounted around a fixed point external to the motorcycle (180);

15. "IMPROVED ANTI-THEFT DEVICE FOR MOTORCYCLES" according to the claim fourteen, **characterised by** the fact that the external rear mounting part (181) is formed by a mounting ring (182), which includes a ring shaped part (183) with a slightly oval shape designed to be held and retained in the chain (111) when the latter is placed around the fixed part external to the motorcycle; this ring (183) is fixed to one of its ends by an arm (184) which extends outwards forming a pivot (185), which has been designed to be placed into and retained in a hole in the free bushing (112) of the chain (111), with the aforementioned ring (183) having hooks (186a, 186b) designed to be held and retained in the chain (111) by opening and closing the same; the grips (186a, 186b) are preferably formed by a cut in the intermediate sections of the ring (183) in a stepped shape so that one of the sections of the ring (183) forms respective projection (187a, 187b) which fit into the respective matching holes (188a, 188b) in the other section of the ring (183).

16. "IMPROVED ANTI-THEFT DEVICE FOR MOTORCYCLES" according to the claim fourteen, **characterised by** the fact that the external rear mounting part (181') is formed by a mounting ring (189), which includes a "U" shaped part (190) which is anchored/released by a mounting part (191); the curved part (190) has been designed to be held and retained by the chain (111) when the latter has been placed around the fixed part external to the motorcycle (180); its two free ends have pivots (192a, 192b) designed to be inserted in their respective longitudinal holes (193a, 193b) in the mounting part (191); these pivots (192a, 192b) are anchored by their respective bolts (194a, 194b) which are placed into their respective holes (195a, 195b) in the mounting part perpendicular to the first holes (193a, 193b), and the aforementioned mounting part (191) in mounted transversally on a pivot (196), placed into a transverse hole (207) in the aforementioned pivot (196); this pivot (196) is also fitted with a pivot (197) which extends longitudinally and is designed to be inserted inside the corresponding hole in the free bushing mounting (112) of the security chain (111).

17. "IMPROVED ANTI-THEFT DEVICE FOR MOTORCYCLES" according to the claims fourteen and sixteen, **characterised by** the fact that (a) the external rear mounting part (181'') is formed by the external rear mounting part (181'), onto which an extension or section of a security cable (198) has been added with the cable section (198) being fixed by one of its ends to an intermediate part (199) and by the other end to a pivot (200); the intermediate part (199) is transversally mounted to the mounting part (191) in a hole designed for such purposes; this intermediate part (199) has an extended body equipped with a hole (202) to be filled by the end of the chain section (198), with the aforementioned pivot (200) having an expanded body with a hole to house the other end of the cable section (198), and the other end having a pivot (201) which extends longitudinally designed to be inserted into the corresponding hole in the mounting of the free bushing (112) of the security chain (111); or (b) alternatively the external rear mounting part (181''') is formed by the same external rear mounting part (181'), in the which the pivot (197) of the pivot (196) has been replaced by a hinge pin (203) with holes (204a, 204b), this houses a pivot with a pin fitted to the mounting of the free bushing (112) of the security chain (111); or (c) alternatively the external rear mounting part (181'''') is formed by the same external rear mounting part (181'), in the which the pivot (197) of the pivot (196) has been replaced by a projection (205) with a transverse hole (206), this houses a pivot with a pin fitted to the mounting of the free bushing (112) of the security chain (111).

18. "IMPROVED ANTI-THEFT DEVICE FOR MOTORCYCLES" according to the claim 1, **characterised by** the fact that the inside of the fixed bushing (13) on the security chain (11) has a rear hole to house and retain the fixed end of the chain, its front section has a longitudinal slot in an axial direction designed to receive and retain the rotating part of the jointed part (14).
